# EUROPEAN PATENT APPLICATION

(11) **EP 2 926 890 A1**
(43) Date of publication of application: **07.10.2015**
(21) Application number: 13859270.4
(22) Date of filing: 28.11.2013
(51) Int. Cl.: B01F 3/12, C09K 5/00

(54) **PORTABLE MIXING PLATFORM FOR PRODUCING A HEAT-TRANSFER FLUID AND METHOD FOR PRODUCING SAME**

(30) Priority: 30.11.2012 ES 201201195
(71) Applicant: Abengoa Solar New Technologies, S.A., 41014 Sevilla (ES)
(72) Inventor: VALENZUELA RUBIO, Salvador, E-41014 - Sevilla (ES); LOBATO SÁNCHEZ, Hipólito, E-41014 - Sevilla (ES); TRIGUEROS GONZÁLEZ, Miguel, E-41014 - Sevilla (ES); CRUZ ROMERO, Miguel Ángel, E-41014 - Sevilla (ES); PRIETO RIOS, Cristina, E-41014 - Sevilla (ES)
(74) Representative: Garcia-Cabrerizo y del Santo, Pedro Maria
(86) International application number: PCT/ES2013/000266
(87) International publication number: WO 2014/083219

(57) **Abstract**

The invention relates to a portable mixing platform for producing a heat-transfer fluid on site and on an industrial scale, said fluid consisting of a eutectic mixture of diphenyl (DP) and diphenyl oxide (DPO). The platform includes a device that stores DPO in liquid state, a device for supplying DP in solid state, a mixing device in which both components are mixed in liquid state and in the right amount for forming a eutectic mixture, and a device for inerting and treating gases which maintains the DPO and mixing devices under inert atmosphere, as well as drawing the gases vented from both devices to pass said gases through an activated-carbon filter prior to expelling same into the atmosphere. The present invention also relates to the method for producing the eutectic mixture of DP and DPO using the described portable mixing platform.

## Description

### Technical field of the invention

The present invention relates to a portable mixing platform of organic fluid for producing a eutectic organic mixture of various components that is used as heat transfer fluid (HTF) in its place of consumption, i.e. on site and on an industrial scale. This invention is included within the area of portable mixing devices for producing heat-producing fluids for parabolic cylinder solar power plants.

### Background of the invention

Solar thermal power plants concentrate the sun's energy in certain points and on the receivers. This energy in the form of heat is transported by a heat transfer fluid until the steam and electricity generation units. For this purpose, there are different possibilities: organic fluids, mineral oil, pressurized water and glycol, silicon oils, nitrates, ionic fluids, air...To choose the most suitable heat transfer fluids it is necessary to take into consideration in addition to their physical and chemical properties (composition, melting point, heat stability, flammability, heat capacity, density, waste, compatibility with conduction materials, etc.), other factors of great importance such as cost, purity, environmental safety and health.

Heat transfer fluids based on organic fluids are the most-widely used in parabolic cylinder collector solar thermal power plants, and more specifically, the mixtures of diphenyl oxide (DPO) and diphenyl (DP or BPh), in a proportion of 76.5/23.5 by weight of DPO/DP. This composition has not been chosen at random, since it is a eutectic mixture. The eutectic mixture is the mixture of two or more components in a given position, or eutectic composition, which has a melting point (eutectic point) lower than that of the components separately or in different proportions. This eutectic mixture of diphenyl (DP) and diphenyl oxide (DPO) enable pumping the heat-transfer fluid formed by said mixture at relatively low temperatures since its freezing point is situated at only 12°C, compared with 28°C and 69°C of the components separately (DPO and DP, respectively).

The properties of the heat-transfer fluid have a great impact on the technology's capacities, so that the search for alternatives that improve the current state of the art in the terms described: specific heat, viscosity, density, thermal stability, etc... is among the industry's main priorities, with a view to achieving an energy efficient product and with competitive cost.

Most of the commercial plants in operation use the eutectic mixture described. However, the degradation of this fluid occurs exponentially after 400°C, which is considered one of the main drawbacks of this fluid.

Based on the aforementioned, and considering the poor development of viable alternatives, the demand for thermal oil will be very high according to the 5-year forecast of the solar thermal industry, not only due to that generated by the new plants being built, but also as a consequence of the degradation processes, due to the degree of replacement necessary for the plants currently in operation. With a greater flexibility to cover this demand, it means that the costs associated thereto are more competitive, aligning with the cost optimization strategy followed in the renewable energy sector in its aim of achieving the value of conventional energy. The option considered in this invention of making this supply more flexible has a clear advantage in optimizing the costs of the technology. Therefore, it is considered that the users of solar thermal plants are capable of covering their oil demand directly preparing the mixture of the compounds that constitute it from the commercially available DP and DPO compounds. The option of making this mixture and also doing so in a portable platform therefore has a twofold advantage: on the one hand of cheapening the costs given the possibility of being able to make the heat-transfer fluid in the same plant and, on the other, the possibility of making replacements in those process areas that so require.

Diphenyl (DP) is the simplest molecule of the polyphenyl family. It has great heat stability and low vapour pressure. High purity DP is currently prepared by the direct dehydrocondensation of benzene. Both DP and DPO are commercially accessible compounds, so that they can be directly used for preparing a eutectic mixture of both, which will give rise to the heat-transfer fluid.

Since 1932, different patents have been appearing all consisting of new formulations of heat-transfer fluids with different compositions and properties, with their main application being their use in the petrochemical industry. From the start, the mixtures consisting of diphenyls and diphenyl oxides already had great prominence due to their magnificent properties. Patents US 3,888,777 and US 4,622,160, among others, protected the mixtures of DP and DPO, not only in their eutectic proportion, but in a very wide range of proportions and combinations with other compounds and derivatives. Patents EP153818, EP1538189, US6797193, US5117002, among others, disclose the composition of different types of heat transporting fluids, without any of them achieving a mixture capable of replacing the eutectic mixture of DP:DPO as the most used in commercial plants of parabolic cylinder technology.

On the other hand, and with respect to the mixing methodology, despite the fact that there exists a multitude of methods for the mixing and processing of patented fluids and described in the state of the art, none of these makes reference to a portable platform for the mixing of the pure components to give rise to the organic heat transfer fluid (DP-DPO) *in situ,* in the actual plant where it is going to be used.

As examples of the state of the art of patents which disclose mixing methods of heat-transfer fluids we have patent US20090278077, which discloses a process for preparing a heat-transfer oil which, due to the characteristics of its composition, comprises a series of dewaxing steps, selection of particle size, hydroisomerization and mixing with anti-foaming agent. Hence, they include a series of steps unnecessary for our application and disclose them mixing process in itself, such as simple stirring.

Another example of this is patent US7972497, which again discloses a preparation process overlapping that of mixing: different final components of the mixing are added (in this case 2-cyclohexyl-phenyl, 3-cyclohexyl-diphenyl, 4-cyclohexyl-diphenyl, etc...), the temperature is optimized so that catalytic processes occur (up to 190°C) and they apply pressure (up to 25 bar). None of the mixing patents indicated resolve the problem of mixing primary components (already processed): DP and DPO *in situ* in the plant. In first place, as it is not necessary to chemically process these components and in second place as none of these patents consider a unique mechanical mixing system.

The present invention proposes, unlike the documents of the state of the art, a portable mixing platform of DP and DPO to obtain a heat-transfer fluid formed by a eutectic mixture of DP and DPO, which can be used directly *in situ* in a solar thermal plant.

### Description of the invention

The object of the invention is the development of a portable platform that allows the mixing of organic compounds and, more specifically, the mixing of diphenyl (DP) and diphenyl oxide (DPO) to form a eutectic mixture of both compounds that is used as heat-transfer fluid in solar thermal plants. The platform has the characteristics of mobility and versatility necessary to be able to adapt them to different solar thermal concentration plants. The necessary processing devices for the mixing of DP and DPO shall be installed on the portable platform. The devices comprising the portable platform are described below:
- DPO device: comprises a DPO dosing tank, where the DPO is stored in liquid state, a DPO feed pipe which makes it possible to load said compound in the dosing tank from the exterior of the platform, for example, from drums, cisterns or another form of storage, and a pipe which connects the DPO dosing tank to a mixing tank. This device also has a resistance or heat tracing which makes it possible to control and maintain the tank at the suitable temperature so that the DPO is maintained in liquid state. This device has at least two pumps: one of suction of the inlet line to the DPO tank and another drive pump for the line which connects the DPO tank with the mixing tank. Furthermore, so that the amount of DPO dosed to the mixing tank can be controlled (it must be the amount necessary to form a eutectic mixture), this device has a regulation valve and control systems (for example, via flowmeters) for the DPO dosing to the mixing tank.
- Device for supplying DP in solid state: it comprises a DP bag discharger, a hopper or receptacle for loading DP where said compound in solid state is deposited and a transport system of the DP from the hopper to the mixing tank. This transport system may be a worm, a conveyer belt or bucket conveyer. The hopper could have a weight measurement system, as a way to control that the amount loaded is that correct for producing the batch.
- Mixing device for preparing the heat-transfer fluid: it is formed by a mixing tank provided with a stirring system which facilitates the thorough mixing between both compounds (DP and DPO) and heat tracing or electrical resistance which makes it possible to maintain the tank at the temperature necessary to melt the DP, so that both compounds are mixed in liquid state. The mixing tank may also have a high-precision weight measurement system, and a level sensor, with both serving as control forms of the process. Once the mixture has been generated, it is unloaded by a suction pump installed in the mixing tank, making it pass through a system of pipes and flexible connection hoses, allowing it to reach the element of interest within the solar thermal tank (storage tank or overflow tank, for example). The mixing tank may include a pipe for adding additives thereto if necessary.
- Device for inerting and treating gases: This system allows that both the DPO dosing tank and the mixing tank are under inert gas atmosphere, for example, nitrogen, thus avoiding oxidation processes of the compounds, catalysis reactions formation of hydrogen, etc., all processes related to the degradation of heat-transfer fluid. Furthermore, said inert gas acts as drawing fluid of the vented gases produced in the mixing tank and in the DPO dosing tank and of the harmful compounds which are formed during the operation or which are brought by the primary components, to carry them to the outside through an activated-carbon filter, thus avoiding the direct discharge of possible toxic and polluting compounds into the atmosphere. For this purpose, the system for inerting and treating gases comprises an inert gas inlet pipe to the DPO dosing tank and another inert gas inlet pipe to the mixing tank, in addition to an outlet pipe of vented gases from the DPO dosing tank and another outlet pipe of vented gases from the mixing tank. Both vent pipes lead to an activated-carbon filter, previously passing through an air-cooler that allows cooling the gases from the tanks. The source of inert gas may be outside the platform and come from the actual solar thermal plant or be found on the portable platform, such as the case of an inert gas cylinder positioned on the portable platform. In addition to this and as regards the prevention of risk due to spills, this device may comprise a drainage and spill collection system by gravity.

The portable platform thus devised provides a series of important advantages: on the one hand, the heat-transfer fluid is sent directly to the plant for its use in the operation, avoiding the existing and critical pollution that arises as a consequence of the storage in drums or boat transport of the already mixed compound. In this last case of transport by boat, the catalysis which has the consequence of hydrogen formation, added to the presence of chlorine, as a consequence of the absorption of humidity that arises during sea transport, ends with the formation of hydrochloric acid, a very harmful compound for the materials in contact with the heat-transfer fluid in the plant.

Another of the important advantages is the possibility of adapting the portable mixing platform that forms the invention to different plants, in different sites.

Another object of the present invention is the method for the preparation of the heat-transfer fluid from DP and DPO in the described platform. This method comprises the following stages:
1. Supply of DPO from an external cistern or equivalent to the DPO dosing tank, which maintains the DPO compound in liquid state, and later dosing of said compound to the mixing tank in the suitable dose to form a determined amount of eutectic mixture, maintaining under inert atmosphere both the DPO dosing tank and the mixing tank.
2. Supply of DP in solid state, dosed by the discharging of DP bags on a hopper and later the solid DP to the mixing tank through a transport system. The amount of DP unloaded in the hopper and introduced in the mixing tank is the exact amount of DP necessary to form a eutectic mixture with the DPO previously dosed to the mixing tank. At the time of discharging the solid DP in the mixing tank, this already contains the liquid DPO.
3. Mixing of the DP and DPO components in eutectic proportion in the mixing tank by a stirring system and maintaining the temperature of said tank above the melting point of the DP (69°C) to achieve the total melting of said compound. Preferably, the mixing tank shall operate at a temperature of between 70 and 200°C.
4. Drawing the gases or gases vented from the DPO dosing and mixing tanks and sending them through the vent pipes towards the activated-carbon filter, previously passing through an air-cooler where the gases are cooled for the correct operation of the system.
5. Discharging of the eutectic mixture of DP and DPO (heat-transfer fluid) towards the chosen point of the solar thermal platform through the outlet pipe of the mixing tank. Optionally, additives can be added to the mixing tank during the mixing operation of DP and DPO, since, on occasions, it may be convenient to add some kind of additive which improves the thermal and physical properties of the heat-transfer fluid.

The method described is performed at atmospheric pressure (approximately 1 bar); therefore, there is no pressurization in the devices.

### Brief description of the drawings

To complement the description being made and in order to aid towards a better understanding of the invention, a set of drawings is attached where the following has been represented with illustrative and non-limiting character:

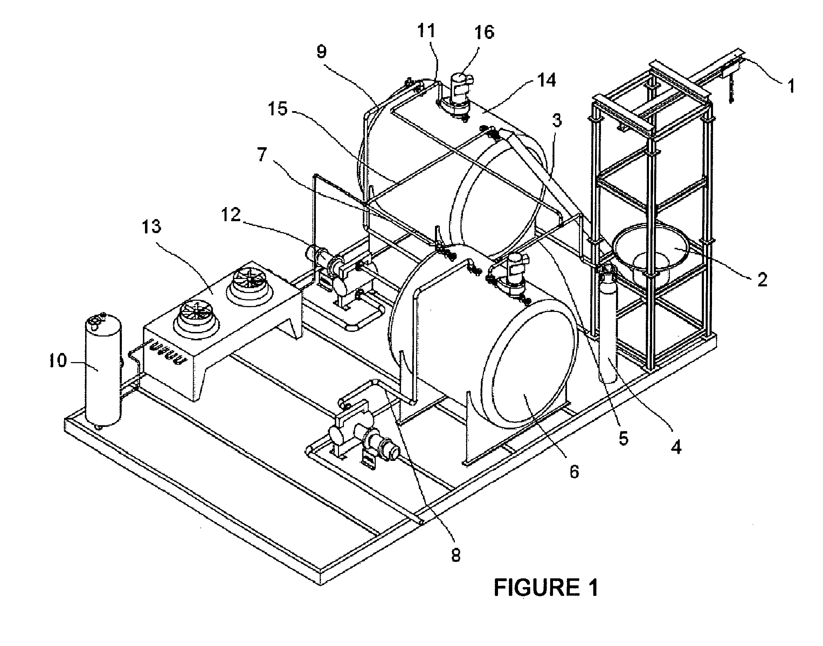

Figure 1: Perspective view of the portable mixing platform of DP and DPO of the present invention.

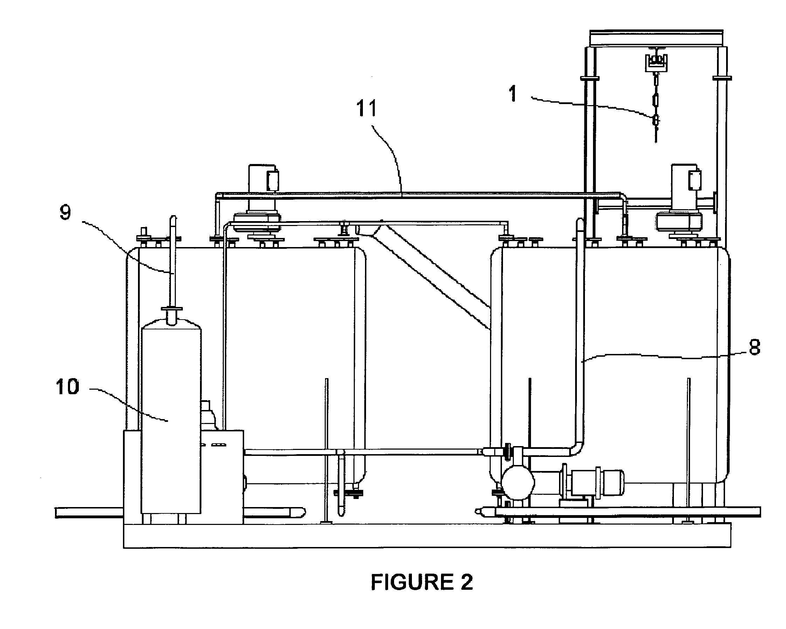

Figure 2: View of a profile of the portable mixing platform of DP and DPO of the present invention.

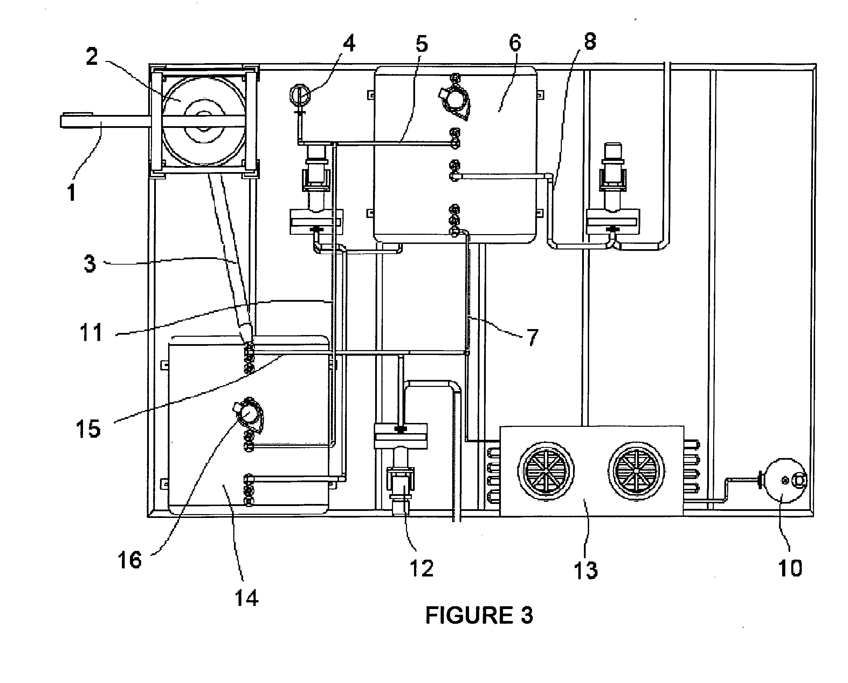

Figure 3: Plan view of the portable mixing platform of DP and DPO of the present invention.

The references that appear in the figures represent the following:
1. DP bag discharger
2. Hopper or receptacle for loading DP
3. Worm for the transport of solid DP (DP transport system)
4. Nitrogen cylinder
5. Inlet pipe of nitrogen to DPO dosing tank
6. DPO dosing tank
7. Vent pipe of the DPO dosing tank.
8. DPO feed pipe from an external supply cistern to the DPO dosing tank
9. Connection pipe of the DPO dosing tank to the mixing tank
10. Activated-carbon filter
11. Inlet pipe of nitrogen to the mixing tank
12. Outlet pipe of the eutectic mixture
13. Air-cooler
14. DP and DPO mixing tank
15. Vent pipe of mixing tank
16. Pipe for adding additives to the mixing tank

### Description of a preferred embodiment

Based on the figures shown, a preferred embodiment is given of the portable mixing platform of the present invention which allows performing on site the preparation of a heat-transfer fluid consisting of the eutectic mixture of DP and DPO.

The mobile platform object of this patent is preferably constituted by the following devices:
- DPO device, comprising the following elements:
   - DPO dosing tank (6): this tank has the function of storing the DPO from an external cistern (not represented) or external supply which will provide DPO in accordance with production requirements. The DPO dosing tank (6) is maintained at a temperature which allows maintaining the DPO in liquid state, preferably between 25 and 35°C, thanks to heat tracing. By regulation valves (not represented) and by driving with a pump (not represented), the amount of DPO necessary for preparing a eutectic mixture is dosed to the mixing tank (14).
   - DPO feed pipe (8) from the external supply cistern to DPO dosing tank (6), whereby the tank (6) is filled with the DPO compound and with the aid of a drive pump (not represented).
   - Connection pipe (9) of DPO dosing tank (6) to the mixing tank (14) wherethrough the DPO circulates towards the mixing tank (14).
- DP device, comprising the following elements:
   - DP bag discharger (1): allows loading the DP bags necessary for preparing a eutectic batch.
   - DP loading hopper (2): is the receptacle where the DP compound in solid state is deposited to be subsequently transported to the mixing tank (14).
   - Worm (3): is the transporting element of solid DP. This element transports the DP from the hopper (2) to the mixing tank (14), where the mixing of DP and DPO will take place.
- Mixing device for preparing the heat-transfer fluid, comprising:
   - DP and DPO mixing tank (14): the two compounds that form the final mixture will be stirred in the same place. This tank (14) has heat tracing, to maintain optimum temperature values in order to melt the components, as well as stirring blades.
   - Outlet pipe of the eutectic mixture of DP and DPO (12), whereby the prepared heat-transfer fluid is collected thanks to a suction pump installed at the tank outlet.
   - In the example represented in the figures, this device also includes a pipe for adding additives (16) to the mixing tank (14).
- Device for inerting and treating gases, comprising:
   - nitrogen cylinder (4), which supplies nitrogen to the DPO and mixing devices to avoid oxidation processes of the compounds, catalysis reactions, formation of hydrogen, in addition to acting as drawing gas. The cylinder is positioned on the platform and connected to the inert gas inlet pipes to the DPO dosing tank (5) and to the mixing tank (11).
   - Inlet pipe of nitrogen to DPO dosing tank (5).
   - Inlet pipe of nitrogen to mixing tank (11).
   - Vent pipe of the mixing tank (15).
   - Vent pipe of the DPO dosing tank (7).
   - Air-cooler (13), connected to the vent pipe (15 and 7), which allows cooling the gases vented before reaching the activated-carbon filter.
   - Activated-carbon filter (10), connected to the air-cooler (13), wherethrough the inerting gas from the DPO dosing tank (6) and mixing tank (14) passes, and which by drawing shall carry with it any potential environmental pollutants.

The method for producing the mixing of DP and DPO object of this patent and which uses the portable platform described, preferably comprises the following stages:
1. Supply of DPO from an external cistern or equivalent to the DPO dosing tank (6), which maintains the DPO compound in liquid state, and later dosing of said compound to the mixing tank (14) in the suitable dose to form a eutectic mixture, maintaining both the DPO dosing tank (6) and the mixing tank (14) under inert gas atmosphere.
2. Supply of DP in solid state by the discharging of DP bags on a hopper (2) and later transport of solid DP to the mixing tank through a transport system, for example, a worm (3); the amount of DP unloaded in the hopper and introduced in the mixing tank (14) is the exact amount of DP necessary to form a eutectic mixture with the DPO previously dosed to the mixing tank (14).
3. Mixing of the DP and DPO components in eutectic proportion in the mixing tank (14) by a stirring system and maintaining the temperature of said tank above the melting point of the DP (69°C) to achieve the total melting of said compound, so that the mixing of both compounds is performed in liquid state. Preferably, the mixing tank (14) shall operate at a temperature of between 70 and 200°C.
4. Drawing the gases or gases vented from the DPO dosing (6) and mixing tanks and sending them through the vent pipes (7, 15) towards the activated-carbon filter (10), previously passing through an air-cooler (13).
5. Discharging of the eutectic mixture of DP and DPO towards the chosen point of the solar thermal platform through the outlet pipe of the eutectic mixture (12).

Optionally, additives can be added to the mixing tank during the mixing operation of DP and DPO.

## Claims

1. Portable mixing platform for producing a heat-transfer fluid consisting of a eutectic mixture of diphenyl (DP) and diphenyl oxide (DPO), **characterized in that** it comprises the following devices:
• DPO device, comprising the following elements:
- a DPO dosing tank (6) wherein the DPO is stored in liquid state from a cistern or external supply, said tank (6) being provided with heat tracing for temperature control, at least one suction pump for the inlet to the tank and another drive pump for the outlet and regulation valves to control the dosing of DPO to the mixing tank (14),
- a DPO feed pipe (8) from the cistern or external supply to the DPO dosing tank (6),
- a pipe connecting the DPO dosing tank (6) to a mixing tank (14);
• device for supplying DP in solid state
• mixing device for preparing the heat-transfer fluid, comprising:
- a DP and DPO mixing tank (14) provided with a stirring and heat tracing system for temperature control,
- an outlet pipe of the eutectic mixture of DP and DPO (12), whereby the prepared heat-transfer fluid is collected thanks to a suction pump installed at the tank outlet;
• device for inerting and treating gases, comprising:
- an inert gas inlet pipe to the DPO dosing tank (5),
- an inert gas inlet pipe to the mixing tank (11),
- a vent pipe of the mixing tank (15),
- a vent pipe of the DPO dosing tank (7),
- an air-cooler (13), connected to the vent pipe (15 and 7), which allows cooling the venting gases, - an activated-carbon filter (10), connected to the air-cooler (13), wherethrough the inerting and venting gas from the DPO dosing tank (6) and mixing tank (14) passes.

2. Portable mixing platform according to claim 1, wherein the device for supplying DP in solid state comprises the following elements:
- a DP bag discharger (1),
- a DP loading hopper (2) where the DP compound in solid state is deposited,
- a transport system of the DP (3) from the hopper (2) to the mixing tank (14);

3. Portable mixing platform according to claim 1, comprising a pipe for adding additives (16) to the mixing tank (14).

4. Portable mixing platform according to claim 1, comprising an inert gas cylinder positioned on the platform and connected to the inert gas inlet pipes to the DPO dosing tank (5) and to the mixing tank (11).

5. Portable mixing platform according to claim 1, comprising a weight measurement system and a level detection system, both high precision, in the DP and DPO mixing device.

6. Portable mixing platform according to claim 1 wherein the DP transport system may be a worm, a conveyer belt or bucket conveyer.

7. Method for producing a eutectic mixture of DP and DPO using the portable platform described in the preceding claims, **characterized in that** it comprises the following stages:
- supply of DPO from an external cistern or equivalent to the DPO dosing tank (6), which maintains the DPO compound in liquid state, and later dosing of said compound to the mixing tank (14) in the suitable dose to form a eutectic mixture, maintaining both the DPO dosing tank (6) and the mixing tank (14) under inert gas atmosphere,
- supply of DP in solid state, by the discharging of DP bags on a hopper (2) and later dosing of solid DP to the mixing tank through a transport system (3); the amount of DP unloaded in the hopper and which is introduced in the mixing tank (14) is the exact amount of DP necessary to form a eutectic mixture with the DPO previously dosed to the mixing tank (14),
- mixing of the DP and DPO components in eutectic proportion in the mixing tank (14) by a stirring system and maintaining the temperature of said tank above the melting point of the DP (69°C) to achieve the total melting of said compound,
- drawing the gases or gases vented from the DPO dosing (6) and mixing (14) tanks and sending them through the vent pipes (7, 15) towards the activated-carbon filter (10), previously passing through an air-cooler (13),
- discharging the prepared eutectic mixture of DP and DPO through the outlet pipe of the eutectic mixture (12).

8. Method for producing a eutectic mixture of DP and DPO, according to claim 7 where the mixing tank (14) operates at a temperature of between 70 and 200°C.

9. Method for producing a eutectic mixture of DP and DPO, according to claim 7 where additives are added to the mixing tank (14) during the mixing operation of the DP and DPO components.
